# EUROPÄISCHE PATENTANMELDUNG

(11) **EP 2 113 855 A1**
(43) Veröffentlichungstag der Anmeldung: **04.11.2009**
(21) Anmeldenummer: 08008104.5
(22) Anmeldetag: 28.04.2008
(51) Int. Cl.: G06F 21/00

(54) **Verfahren zur Verwaltung und Handhabung mehrerer Betriebssysteme in einem Computer oder Computernetzwerk**

(71) Anmelder: Forschungszentrum Karlsruhe GmbH, 76133 Karlsruhe (DE)
(72) Erfinder: Weber, Arnd, Dr., 79100 Freiburg (DE); Weber, Dirk, 61348 Bad Homburg (DE)
(74) Vertreter: Rückert, Friedrich

(57) **Zusammenfassung**

In einem Verfahren zur Verwaltung und Handhabung mehrerer Betriebssysteme in einem Computer oder Computernetzwerk wird eine Taskbar zur Verwaltung auf einem Darstellungsmittel mit einer Siegelfunktion kombiniert. Weiter wird die Datenintegrität eines Hypervisor-Betriebssystems über ein erstes Siegel authentifiziert In jedem weiteren auf dem Hypervisor installierten des wiedergegebenen Betriebssystem kann ein weiteres Siegel zugewiesen werden, das gleichzeitig in dem Button dargestellt wird, der wiederum dem Betriebssystem in der vom Hypervisor verwalteten Taskbar zugewiesen wird. In dem Fall, dass ein mit dem Button geöffnetes Fenster nicht im Voll-Bild-Modus geöffnet wird, wird das Siegel zusätzlich im Rahmen des Fensters dargestellt. Applikationen oder Daten innerhalb eines durch ein Siegel geschützten Betriebssystems können mit weiteren Siegeln versehen werden, deren jeweiliger Button mit dem Siegel versehen wird. Wird ein Siegel innerhalb der Kette: Hypervisor, Betriebssystem, Applikation, Daten, gebrochen, werden die darauf aufbauenden Siegel nicht mehr dargestellt. Zur Erhöhung der Benutzbarkeit wird einzelnen Ketten eine Familienstruktur gegeben, um die Position innerhalb der Arbeitsumgebung zu lokalisieren/identifizieren.

[DAW1] Installiert ist unsauber, das OS kann ja auch auf einem anderen System laufen, aber hier nur dargestellt werden.

## Beschreibung

Die Erfindung betrifft ein Verfahren zur Verwaltung und Handhabung mehrerer Betriebssysteme in einem Computer oder in einem Computernetzwerk.

Das technische Gebiet betrifft die Bedienung von Betriebssystemen, d. h. Computer mit mehreren Betriebssystemen, die durch ein besonderes Betriebssystem, das Hypervisor genannt wird, kontrolliert werden. Ein Hypervisor ist ein Betriebssystem, auf dem mehrere Betriebssysteme in getrennten, voneinander prinzipiell isolierten Compartments installiert sind, die parallel laufen können (nicht nur parallel installiert sind). Dabei ist die benötigte Rechenleistung nicht auf eine einzige physikalische Maschine beschränkt. Isoliert heißt, dass Betriebssysteme in einer von einem Hypervisor kontrollierten Umgebung sich gegenseitig nicht ungewollt beeinflussen können (keine Virenübertragung etc.). Der Hypervisor hat Kontrolle über die Systemressourcen und damit auch über I/O (Maus, Tastatur, Grafikkarte, USB etc). Durch den Hypervisor kontrolliert werden gestartete Betriebssysteme auf Abruf auf einem Bildschirm angezeigt. Der Hypervisor stellt für die Betriebssysteme so genannte Compartments zur Verfügung, in denen sie dann laufen.

In der EP 1 526 424 A2 wird beschrieben, wie eine graphische Nutzerschnittstelle in einem System mit einer Hochsicherheit-Anwendungs-Umgebung eingerichtet wird. Es werden Techniken vorgestellt, um Sicherheit für graphische Nutzer-Schnittstellen-Elemente einzurichten, die in einem System dargestellt werden, in dem ein erstes Betreiber-Betriebssystem zusammen mit einem zweiten Hochsicherheit-Anwendungs-System gebraucht wird, wobei das erste System wenigstens etwas von der Infrastruktur des zweiten Systems einrichtet. Graphische Nutzer-Schnittstellen-Elemente, verbunden mit dem Hochsicherheit-Anwendungs-System, werden gehindert, verdunkelt zu werden, und an irgendeiner Teiltransparenz gehindert. Aus einer unsicheren Umgebung wird gewissermaßen ein Ausblick in eine sichere gegeben.

In der US 7,302,585 B1 wird ein System beschrieben, um eine vertrauenswürdige Nutzer-Schnittstelle einzurichten. Das System besteht aus einem Computersystem, das einen gesicherten Bildschirm-Prozessor einsetzt, das einen gesicherten Prozessor und einen gesicherten Speicher hat, gegenständlich und funktionell getrennt von dem Prozessor und Speicher des Computer-Systems. Das Siegelbild kann überall sein und hat keine Taskbar-Funktionalität. Das Siegelbild ist auf dem Bildschirm verschiebbar.

In der US 2005/0275661 A1 ist keine Taskbar enthalten und das Siegelbild steht störend im Hintergrund.

Bekannt ist eine Statusbar ohne Funktionalität und ohne Visualisierung von Sicherheit. Die wichtigsten Produkte, beispielsweise: VMware, Xen, haben keine Taskbar und sind nur durch Administratoren über komplizierte Schnittstellen nutzbar. Es gibt keine graphische Bedienoberfläche in einem Hypervisor (graphical user interface, GUI), die Informationen über den Zustand eines Betriebssystems vermittelt und eine einfache und sichere Handhabung gewährleistet.

Heutige Hypervisor sind sowohl für Administratoren als auch Endnutzer schwierig zu benutzen. Die Isolation zwischen den Compartments ist nicht visualisiert, schwierig konfigurierbar und schwierig handhabbar. Es gibt außerdem wenig Schutz gegen Sicherheitsangriffe, z.B. durch "Malware", wie Mimikry (wie etwa die komplette Vorspiegelung eines Compartments), Phishing und Trojanische Pferde.

Daraus entstand die Aufgabe, die der Erfindung zugrunde liegt, nämlich: eine Nutzerschnittstelle eines zukünftigen Computers mit Hypervisor zu definieren. Die Aufgabe wird durch die in Anspruch 1 aufgeführten Verfahrensschritte gelöst. Eine Taskbar wird zur Verwaltung auf einem Darstellungsmittel mit einer Siegelfunktion kombiniert. Es wird die Datenintegrität eines Hypervisor-Betriebssystems über ein erstes Siegel authentifiziert. Es kann jedem weiteren auf dem Hypervisor installierten Betriebssystem ein weiteres Siegel zugewiesen werden, das gleichzeitig in dem Button dargestellt wird, der dem Betriebssystem in der vom Hypervisor verwalteten Taskbar zugewiesen wird. Wobei in dem Fall, dass ein mit dem Button geöffnetes Fenster nicht im Voll-Bild-Modus geöffnet wird, das Siegel zusätzlich im Rahmen des Fensters dargestellt wird. Applikationen oder Daten innerhalb eines durch ein Siegel geschützten Betriebssystems können mit weiteren Siegeln versehen werden, deren jeweiliger Button innerhalb des Betriebssystems-Buttons dargestellt werden kann. Wird ein Siegel innerhalb der Kette: Hypervisor, Betriebssystem, Applikation, Daten, gebrochen, werden die darauf aufbauenden Siegel nicht mehr dargestellt. Zur Erhöhung der Benutzbarkeit wird einzelnen Ketten eine Familienstruktur gegeben, um die Position innerhalb der Arbeitsumgebung zu lokalisieren/identifizieren.

In den abhängigen Ansprüchen sind weitere vorteilhafte und nützliche Verfahrensschritte aufgeführt. So wird nach Anspruch 2 die Datenintegrität von sich dynamisch ändernden Daten mit einem Datensatz für das Siegel verbunden, die von der Siegelfunktion dynamisch ausgeführt werden, dies kann z.B. bei der Runtime Attestation genutzt werden.
Nach Anspruch 3 wird der Sicherheitslevel durch die entsiegelten Daten wiedergeben, zur Darstellung von z.B. Zertifizierungslevel oder Softwarequalitätslevel.

Nach Anspruch 4 wird oder werden ein angesprochenes oder angesprochene Siegel auf Aufforderung durch einen Anwender hervorgehoben.
Nach Anspruch 5 werden bei Betätigung von einem zugehörigen Button in der Taskbar die zugeordneten Daten zur Hervorhebung in einem Fenster oder im Voll-Bild-Modus in den Vordergrund gestellt und umgekehrt, wenn man auf ein Fenster klickt, wird der zugehörigen Button hervorgehoben.
Nach Anspruch 6 können Ketten oder/und Familien von Siegeln in einem Feld zusammengefasst werden. Ein Feld hat dann die Funktion eines Buttons, und die Felder sind unabhängig voneinander. Dabei enthalten Ketten gleiche Siegeldaten und Familien miteinander in Zusammenhang stellbare Daten, die auch hierarchisch gliederbar sein können. Beispiel für eine Kette kann ein Bild sein, das sowohl im Betriebssystem als auch in der Applikation dargestellt wird. Beispiel für eine Familie ist, dass der Hypervisor mit dem Bild des Großvaters, das Betriebssystem mit dem Bild des Vaters, und die Applikation mit dem Bild des Sohnes versehen wird. In Verbindung mit Anspruch 3 können z.B. bei einem evaluierten System verschiedene Tierfilme dargestellt werden.

Nach Anspruch 7 werden die Verbindungen zwischen Betriebssystemen dargestellt. So können völlige Geschlossenheit, singuläre Kanäle wie ein Clipboard oder ein dezidierter Kanal zur Bank für ein Onlinebanking-Betriebssystem bis hin zur Darstellung des Zustandes aller Kanäle, dargestellt werden.

Neu sind damit die Merkmale:
eine graphische Bedienoberfläche, GUI, vermittelt die sicherheitsrelevanten Statusinformationen über Betriebssysteme durch in Ketten und Familien strukturierte Siegel,
die einfache Handhabung eines Hypervisors über mausgesteuerte Tasten, Pull-Down-Menüs;
eine Kombination aus Hypervisor, Taskbar und Desktop.

Die einleitend aufgeführte Problematik wird durch die hier vorgestellte einfache und sichere Handhabung eines Hypervisors gelöst. Neu ist die Kombination eines Hypervisors mit einer Taskbar, wobei die letztere Statusinformationen des Hypervisor vermittelt. Hinzu kommt der restliche Bildschirminhalt, ein Desktop, der Informationen über den Zustand von Betriebssystemen liefert.

Diese Taskbar soll fachsprachlich "Look and Feel", also das Aussehen und die Anwendbarkeit einer gewohnten Taskbar aufgreifen. Sie befindet sich außerhalb der auf dem Rest des Bildschirms angezeigten Betriebssysteme, auch Gast-Betriebssysteme genannt (in der technischen Literatur wird auch von Domäne gesprochen). Diese Taskbar befindet sich ebenfalls außerhalb des Desktops des Hypervisor, der sich wie ein Betriebssystem in einem der Compartments befindet. Hypervisor-Taskbar und -Desktop können zwei Betriebssysteme sein, die in zwei Compartments gestartet werden, wobei dem Betriebssystem der Hypervisor-Taskbar ein Bereich des Bildschirms zur grafischen Ausgabe vom Hypervisor zugewiesen wird, z.B. ein Streifen am Rand.

Durch die Taskbar soll der Umgang mit einem Hypervisor für einen Anwender erleichtert werden. Bisher geschieht dessen Bedienung hauptsächlich über Kommandozeilenbefehle und TastenKombinationen. Die von uns erdachte Taskbar wird vom Hypervisor generiert und weist den einzelnen Compartments Schaltflächen zu. Diese Schaltflächen dienen zum Umschalten zwischen den einzelnen gestarteten Compartments. Die Hypervisor-Taskbar ermöglicht es dem Benutzer, zwischen Compartments umzuschalten, ähnlich wie gewohnt zwischen Applikationen, nämlich per Mausklick oder über die Tastatur. Dadurch erleichtert sich für einen Benutzer die Handhabung von Compartments.

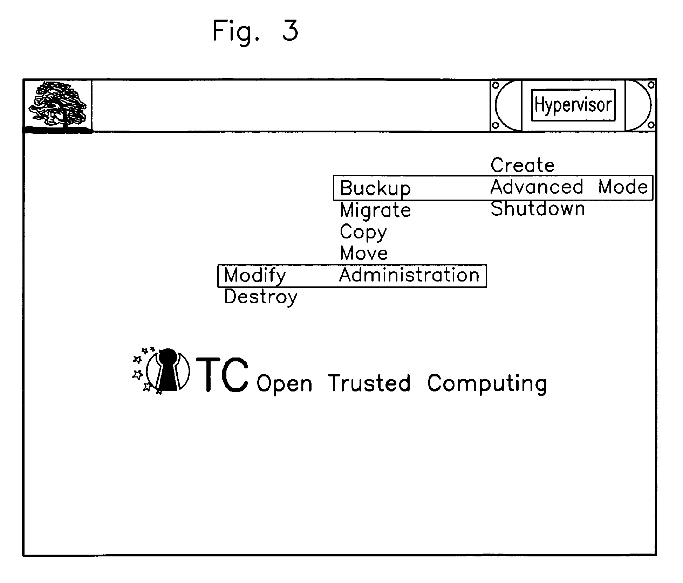

Ferner kann über die Auswahl mit der rechten Maustaste auf Schaltflächen innerhalb der Taskbar ein Kontextmenü aufgerufen werden (siehe Fig. 3), dass nach Angaben des Hypervisors Informationen und Konfigurationsmöglichkeiten des einzelnen Compartments zulässt. So ist es auch möglich, Compartments zu löschen, z.B. mitsamt Malware oder DRM-Systemen. Zusätzlich neue Gestaltungselemente innerhalb der Hypervisor-Taskbar sind ein Siegelbild, fachsprachlich: sealed image, genannt. Das Siegelbild wird vom Benutzer ausgewählt und ist nur ihm bekannt und kann als Zugang zum Hypervisor selbst, ähnlich einem Start-Knopf in Taskbars anderer Betriebssysteme, genutzt werden. Da es sich unter der Kontrolle des Hypervisor befindet, kann kein Screenshot oder ähnliches davon erstellt werden, sodass Mimikry nicht greifen kann.

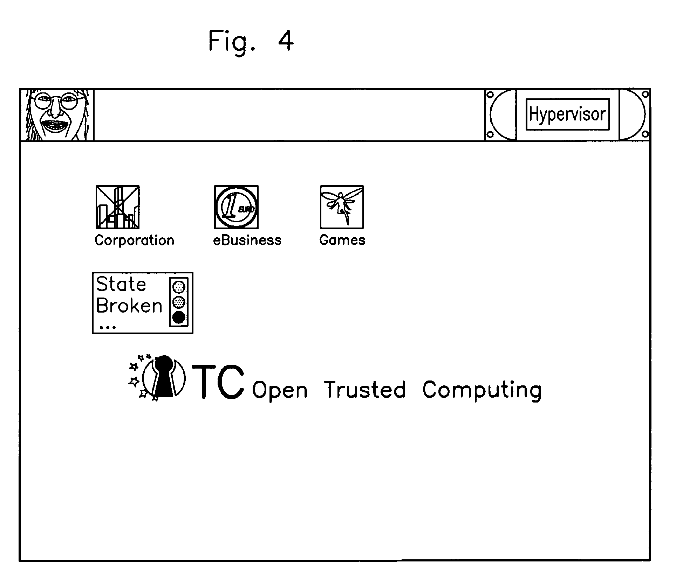

Es kann nur entschlüsselt und danach angezeigt werden, wenn der Hypervisor korrekt gestartet wurde. Ist der Hypervisor kompromittiert (in einem nicht bekannten Zustand), erscheint dieses Bild nicht. Der Hypervisor ist seinerseits in der Lage, Betriebssysteme zur Ermittelung ihres bekannten Zustands zu messen und im Falle einer Kompromittierung darüber Informationen zu liefern, sodass sich kompromittierte Betriebssysteme z.B. nicht starten lassen, der Benutzer zumindest aber darüber informiert werden kann (Ampel, Warnmeldungen/-zeichen) (siehe Fig. 4). Dies kann sowohl über den Button, sofern dieser sich aufrufen ließ, oder auf dem Desktop des Hypervisor geschehen. Dank der hier geschilderten innovativen Visualisierung ist sichergestellt, dass der Benutzer tatsächlich zwischen zwei von ihm ausgewählten Betriebssystemen wechselt, und nicht in eines, das nur so aussieht, als ob es das Richtige wäre. Zur Implementation kann eine "Trusted Computing Base" (TCB) (ein Hypervisor mit trusted platform module (TPM) Funktionalität) benutzt werden.

Eine Taskbar zeigt normalerweise innerhalb eines Betriebssystems an, in welcher Applikation sich der Benutzer befindet. Die Schaltflächen der Hypervisor-Taskbar zeigen dagegen zusätzlich an, in welchem Compartment und damit Betriebssystem sich der Benutzer befindet. Visuell können die Schaltflächen dazu wie zum Eindrücken eines Schalters dargestellt werden, der bei Aktivierung aufleuchtet oder die Farbe wechselt. Ferner wird die Taskbar des Hypervisor von den Compartments grafisch abgesetzt. Diese Darstellung erfolgt z.B. in Stahl, Schwarz oder Grau, um die Härte des Codes vor unbemerkter Manipulation des Hypervisors zu betonen. Die Isolierung der Compartments voneinander wird durch die Schaltflächen der Taskbar sowie deren Erscheinungsbild mit Stahlwänden oder Balken betont. Andere Möglichkeiten kann sich der Benutzer in Zukunft dann selbst, über z.B. das neuartige Kontextmenü, konfigurieren.

Die Taskbar dunkelt sich optional selbstständig ab, um nicht zu stören, beispielsweise bei Videoanwendungen, Spielen. Sie verschwindet nicht ganz, um Mimikry keine Angriffsmöglichkeit zu gewähren. Als Variante kann die Taskbar auch ganz oder teilweise verschwinden; dabei würde sie, wenn die Maus dorthin bewegt wird, wo sie war, wieder erscheinen. Als weitere Variante kann die Taskbar auch ganz oder teilweise verschwinden und wieder zurückgeholt werden, wenn ein bestimmter Tastendruck (einzelne Taste oder Tastenkombination) erfolgt.

Zukünftige Betriebssysteme könnten die Schaltflächen von Compartments innerhalb des jeweiligen Betriebssystems haben. Dadurch werden sich Applikationen, Betriebssysteme und Betriebsysteme mit eingeschränkten Funktionalitäten, z. B.: ein dediziertes Spiele-Betriebssystem oder Banking-Betriebssystem, kaum noch von ihrer Auswahlmöglichkeit aus unterscheiden und dadurch schneller genutzt werden können. Damit einher geht der Verzicht auf Reboot, zum Start eines anderen Betriebssystems in einem Multibootsystem. Somit kann bei einem zukünftigen Hypervisor durch die Kontrolle des Hypervisors über die Grafikkarte der Unterschied zwischen Applikation und Betriebssystem fließend sein, so dass auch Applikationen einzelner Betriebssysteme in diese durch Sealing geschützte Taskbar geladen werden und Betriebssysteme auch geschützt im Desktop als Icon angezeigt werden können. Dabei sind Ergänzungen um andersartige Ausgabeformen, wie Rütteln, fachsprachlich: Force-Feed-Back, Zoom- oder Lupenfunktion, Filme, Audiodaten, oder Braille-Schrift (Blindenschrift) und andere Outputkanäle, wie spezielle Tastaturen und USB-Devices, Maus-Interface, Hilfsbildschirm gegeben und somit möglich.

Das Verfahren wird durch die folgenden graphischen Vorschläge weiter verdeutlicht und beispielhaft veranschaulicht. Im Einzelnen wird gezeigt:
Figur 1 die Hypervisor-Taskbar;
Figur 2 drei gestartete Compartments;
Figur 3 den Hypervisor ohne Arbeitsbetriebssystem;
Figur 4 die Anzeige des Siegelbilds;
Figur 5 eine existierende Statusbar.

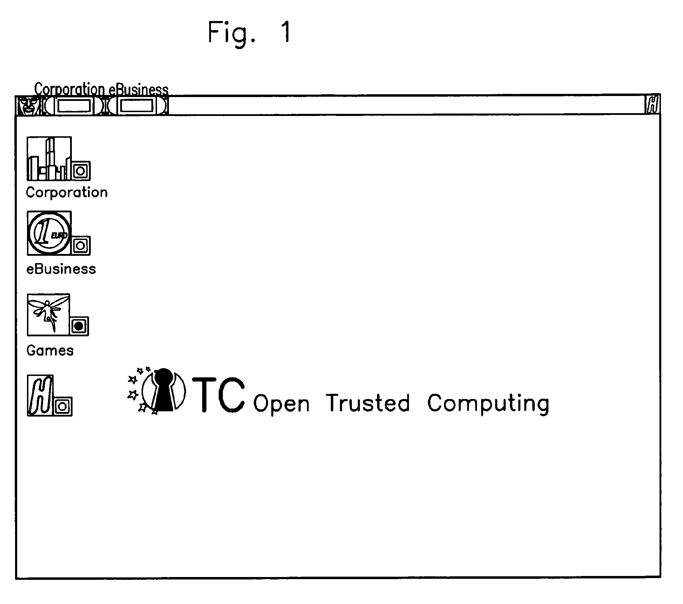

In Figur 1 ist die Hypervisor-Taskbar mit 3 gestarteten Betriebssystemen: Corporation, eBusiness, H (Hypervisor) und einem ungestarteten Spiel (Games) dargestellt. Dabei ist das Compartment des Hypervisors als aktives im Vordergrund und in hier z.B. weiß beleuchtet dargestellt. Dadurch ist auch der Desktop des Hypervisor auf dem Rest des Bildschirms zu sehen. Im Hypervisor-Desktop sind 4 Compartments zu sehen. In diesen sind die Betriebssysteme installiert. Drei davon sind gestartet (grün), dass heißt, diese Betriebssysteme sind hochgefahren und können über die Taskbar durch Mausklick umgeschaltet werden. Der Start erfolgte über das Drücken des Knopfes neben dem Compartment-Icon. Ebenso funktioniert das Herunterfahren eines Compartments. Da der Hypervisor das erste zu startende Betriebssystem ist, ist der Knopf auf dem Desktop neben dem H immer grün. Beim Drücken zum Herunterfahren des Hypervisor wechselt der Knopf dann auf Rot. Diese Funktion wird in einer weiterentwickelten Version des Hypervisors auf ein Kontextmenü des Hypervisor in der Taskbar gelegt (siehe Figur 3). Eine weitere Entwicklung ist, dass für den Hypervisor ein "H" im Design einer Gangschaltung gewählt wurde, um den Vorgang des Umschaltens zwischen Betriebssystemen grafisch zu vermitteln. Zu beachten ist oben links das Siegelbild, das den Hypervisor als korrekt ausweist, solange es angezeigt wird. Im Siegelbild könnten, in einer Variation, die Funktionen des Hypervisor-Knopfes auch integriert sein

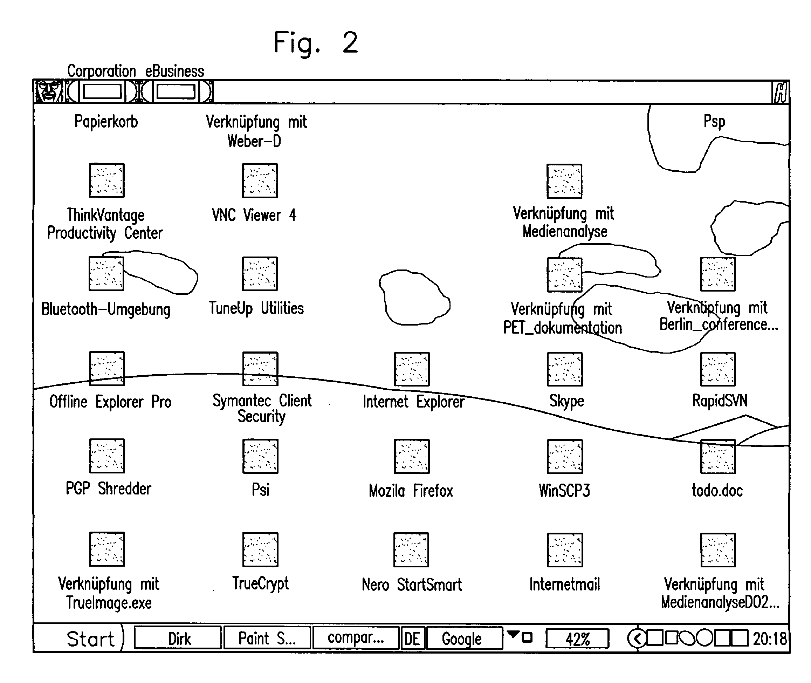

In Figur 2 sind 3 gestartete Compartments dargestellt. Hierbei ist ein Windows-Betriebssystem im Vordergrund, dies ist blau erleuchtet, und die Taste erscheint eingedrückt. Das H des Hypervisors ist dunkel. Das H befindet sich diagonal gegenüber dem Windows Start-Knopf. Da von links nach rechts gelesen wird, stehen links zuerst die Arbeitsbetriebssysteme und erst rechts der seltener benötigte Zugang zum Hypervisor.

Figur 3 zeigt den Hypervisor ohne Arbeitsbetriebssysteme. In diesem Hypervisor sind noch keine weiteren Compartments für Arbeitsbetriebssysteme installiert. Hier wird die Hypervisor-Taste erleuchtet dargestellt. In diesem Fall wurde ein anderes Siegelbild benutzt. Als Variante wird hier kein Hypervisor-Compartment-Icon im Hypervisor-Desktop angezeigt, da die dazugehörigen Funktionalitäten über das hier dargestellte Kontextmenü aufgerufen werden können. Der Hypervisor wird als Taste/Knopf dargestellt.

Figur 4 zeigt die Situation, dass der Hypervisor in Ordnung ist. Eines der Compartments befindet sich in einem nicht ordnungsgemäßen Zustand und lässt sich nicht starten, wenn versehentlich oder betrügerisch mindestens ein Bit manipuliert wurde.

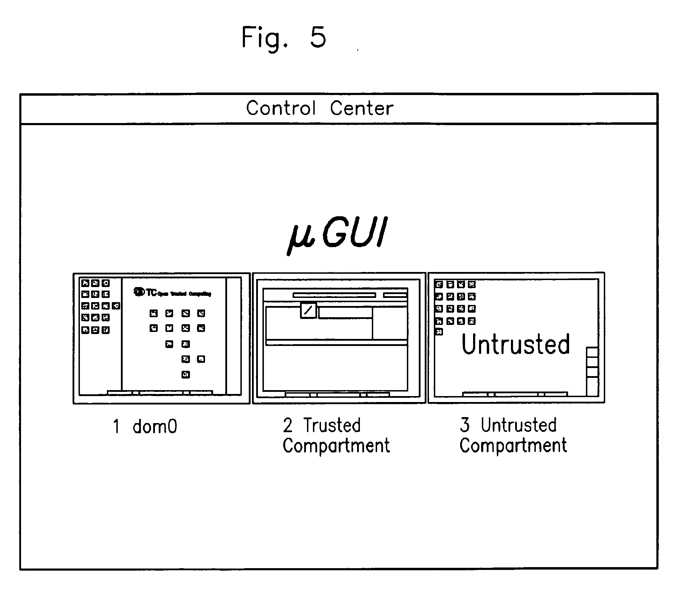

Figur 5 schließlich zeigt eine bekannte existierende Statusbar. Die Statusbar diese Hypervisors, der Balken am oberen Ende des Bildschirms, enthält weder Auswahlknöpfe noch ein Siegelbild, sonder zeigt nur den Namen des jeweiligen Compartments an. Umschalten zwischen Betriebssystemen funktioniert über Tastenkombinationen.

## Patentansprüche

1. Verfahren zur Verwaltung und Handhabung mehrerer Betriebssysteme in einem Computer oder Computernetzwerk, besteht aus den Schritten:
a) eine Taskbar zur Verwaltung wird auf einem Darstellungsmittel mit einer Siegelfunktion kombiniert;
b) die Datenintegrität eines Hypervisor-Betriebssystems wird über ein erstes Siegel authentifiziert;
c) jedem weiteren auf dem Hypervisor installierten [DAW1] oder wiedergegebenen Betriebssystem kann ein weiteres Siegel zugewiesen werden, das gleichzeitig in dem Button dargestellt wird, der dem Betriebssystem in der vom Hypervisor verwalteten Taskbar zugewiesen wird, wobei in dem Fall, dass ein mit dem Button geöffnetes Fenster nicht im Voll-Bild-Modus geöffnet wird, das Siegel zusätzlich im Rahmen des Fensters dargestellt wird;
d) Applikationen oder Daten innerhalb eines durch ein Siegel geschützten Betriebssystems können mit weiteren Siegeln versehen werden, deren jeweiliger Button mit dem Siegel versehen wird;
e) wird ein Siegel innerhalb der Kette: Hypervisor, Betriebssystem, Applikation, Daten, gebrochen, werden die darauf aufbauenden Siegel nicht mehr dargestellt;
f) zur Erhöhung der Benutzbarkeit wird einzelnen Ketten eine Familienstruktur gegeben, um die Position innerhalb der Arbeitsumgebung zu lokalisieren / identifizieren.

2. Verfahren nach Anspruch 1, **dadurch gekennzeichnet, dass** die Datenintegrität von sich dynamisch ändernden Daten mit einem Datensatz für das Siegel verbunden wird, der von der Siegelfunktion dynamisch ausgeführt wird.

3. Verfahren nach Anspruch 2, **dadurch gekennzeichnet, dass** der Sicherheitslevel durch die entsiegelten Daten wiedergeben wird.

4. Verfahren nach Anspruch 1, **dadurch gekennzeichnet, dass** ein angesprochenes oder angesprochene Siegel auf Aufforderung durch einen Anwender hervorgehoben wird oder werden.

5. Verfahren nach einem der vorangehenden Ansprüche, **dadurch gekennzeichnet, dass** bei Betätigung von einem zugehörigen Button in der Taskbar die zugeordneten Daten zur Hervorhebung in einem Fenster oder im Voll-Bild-Modus in den Vordergrund gestellt werden, und umgekehrt, wenn man auf ein Fenster klickt, wird der zugehörigen Button hervorgehoben.

6. Verfahren nach einem der vorangehenden Ansprüche, **dadurch gekennzeichnet, dass** Ketten oder/und Familien von Siegeln in einem Feld zusammengefasst werden, wobei ein Feld die Funktion eines Buttons hat und Felder unabhängig voneinander sind.

7. Verfahren nach einem der vorangehenden Ansprüche, **dadurch gekennzeichnet, dass** Verbindungen zwischen Betriebssystemen dargestellt werden.
